# FASCICULE DE BREVET EUROPEEN

(11) **EP 0 620 537 B1**
(45) Date de publication et mention de la délivrance du brevet: **27.01.1999**
(21) Numéro de dépôt: 93810267.0
(22) Date de dépôt: 14.04.1993
(51) Int. Cl.: G06K 19/077

(54) **Dispositif électronique de marquage**
Elektronische Vorrichtung zur Kennzeichnung
Electronic marking device

(43) Date de publication de la demande: 19.10.1994
(73) Titulaire: GUSTAFSON, Ake, CH-1618 Châtel-St-Denis (CH)
(72) Inventeur: GUSTAFSON, Ake, CH-1618 Châtel-St-Denis (CH)
(74) Mandataire: Fischer, Franz Josef

(56) Documents cités:
- EP-A- 0 180 380
- EP-A- 0 376 062
- EP-A- 0 481 776
- DE-A- 3 212 039
- PATENT ABSTRACTS OF JAPAN, vol. 7, no. 64 (P-183), 1983; & JP - A - 57209578 (FUJITSU K.K.)
- DATABASE WPI, Derwent Publications Ltd., London, GB; DATABASE WPI, accession no. 91-052404, week 9108; & DK - A - 890002644 (J.F. BJERNSON et al.)

## Description

La présente invention concerne un dispositif électronique de marquage, destiné tout particulièrement mais non exclusivement à la reconnaissance de pièces d'habillement.

Les entreprises utilisant un nombreux personnel, ce personnel devant porter des habits de travail particuliers, comme par exemple des blouses pour le personnel hospitalier ou des salopettes ou autres habits de protection pour le personnel de certaines usines, sont généralement abonnées à une entreprise de location d'habits de travail, cette entreprise pouvant aussi généralement assurer régulièrement le nettoyage et l'entretien de ces habits.

Il est nécessaire pour les entreprises utilisant ces habits ainsi que pour celles de location et/ou d'entretien de pouvoir reconnaître individuellement chacun des habits, principalement après que ceux-ci aient été lavés, respectivement entretenus. En effet, tout d'abord l'entreprise de location peut avoir loué le même type d'habit à plusieurs entreprises; il est donc nécessaire que chaque habit soit acheminé vers la bonne entreprise utilisatrice. Ensuite, pour celle-ci, il est nécessaire d'acheminer chaque habit vers son propre détenteur, l'habit en question étant généralement adapté à la fonction et à la taille de ce dernier, et enfin le porteur de l'habit de travail est généralement satisfait de savoir que l'habit qu'il reçoit est le même que celui qu'il avait envoyé au nettoyage. Le problème de la reconnaissance est encore plus compliqué lorsque l'entreprise utilisatrice loue des habits de travail à plusieurs entreprises de location ou lorsque celle-ci n'assure pas l'entretien mais que le lavage est assuré par une ou plusieurs autres entreprises différentes. Il est donc nécessaire que chaque habit soit marqué individuellement et porte des indications relatives à l'entreprise de location, à celle d'utilisation ainsi qu'au détenteur de l'habit, des indications sur l'entreprise de nettoyage et d'entretien ou sur le service dans lequel travaille le détenteur pouvant encore figurer sur le marquage. Les indications ci-dessus servent en outre à la connaissance des stocks d'habits, de leur circulation et peuvent faciliter les diverses facturations de services rendus.

Généralement les indications nécessaires figurent sur une étiquette fixée de manière permanente ou amovible à l'habit et portant ces indications en clair ou sous forme codée, par exemple un code alphanumérique ou un code à barres. Afin d'éviter des manipulations et des contestations, il est avantageux que l'étiquette soit fixée de manière permanente à l'habit, mais dans ce cas le marquage figurant sur l'étiquette peut disparaître après une ou plusieurs opérations de lavage dépendant des conditions et des produits utilisés pour le lavage. La présence de l'étiquette, selon le matériau utilisé pour celle-ci, peut aussi gêner les opérations de nettoyage, en particulier le repassage final de l'habit. De plus, en cas de changement de l'un des éléments du code, il est nécessaire de changer l'étiquette, ce qui peut être long et onéreux au cas où un gravage est à effectuer. Mais l'inconvénient majeur réside dans le fait que pour chaque attribution de l'habit en question, il est nécessaire de trouver son étiquette et de la lire, ce qui augmente le nombre de manipulations.

L'art antérieur connu est révélé par W0-A-93/12513 ainsi que par DK-A-8.902.644. Le premier de ces documents qui est à considérer uniquement au point de vue de la nouveauté selon Art. 54.3 et 54.4 de la CBE, décrit un dispositif de marquage pour lequel les contraintes d'étanchéité et de résistance au lavage ne sont pas nécessaires. Le deuxième de ces documents mentionne que ces exigences sont nécessaires, toutefois sans indiquer les moyens par lesquels elles sont remplies.

Un premier but de l'invention est donc de proposer un dispositif de marquage d'un code, pouvant être lu par des moyens électroniques et pouvant être appliqué à un habit devant subir des opérations de nettoyage à température élevée et/ou utilisant des produits nocifs.

Un autre but de l'invention est de proposer un dispositif dont le code peut être lu à distance, sans qu'il soit nécessaire de manipuler ou d'ouvrir l'habit.

Encore un autre but de l'invention est de proposer un dispositif dont le code peut être modifié par des moyens électroniques, sans qu'il soit nécessaire de retirer le dispositif.

Ces différents buts sont atteints par un dispositif selon l'invention répondant aux caractéristiques des revendications 1 à 5, des utilisations particulières du dispositif étant mentionnées dans les revendications 6 et 7.

L'invention est décrite plus en détail ci-dessous en regard du dessin annexé comportant les figures où:
la figure 1 représente une bande vue par-dessus, comportant plusieurs dispositifs de marquage selon l'invention, telle qu'elle sort de fabrication,
la figure 2 représente une première forme d'exécution d'un dispositif de marquage selon l'invention vu en coupe, montrant en particulier son utilisation, et
la figure 3 représente une autre forme d'exécution d'un dispositif de marquage selon l'invention.

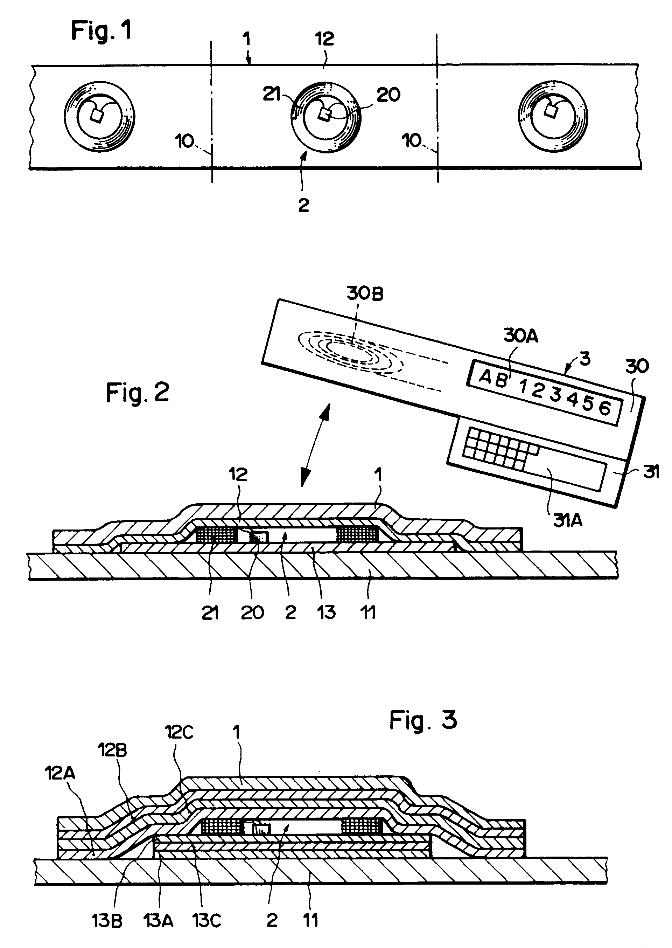

La figure 1 montre, approximativement à l'échelle 1:1, une bande 1 en matériau souple, de préférence en textile, tissé ou non-tissé, mais pouvant aussi être en matériau synthétique, sur laquelle une première couche 12 d'un matériau thermoplastique, thermoadhésif ou autocollant a été déposée, recouvrant de préférence toute la surface supérieure de la bande 1. Une pluralité de circuits électroniques de marquage 2, chacun composé d'un circuit 20 dont deux pistes métalliques sont reliées aux deux extrémités d'un fil constitué en un bobinage 21 ont été disposés par-dessus la première couche 12 de manière à y adhérer. La bande 1 est une bande continue, sur laquelle une machine automatique dispose les circuits de marquage 2 à distance régulière. Comme on le voit aussi sur les figures suivantes, d'autres couches peuvent ensuite être déposées et appliquées par des moyens thermiques pour maintenir et protéger les circuits 2 sur la bande 1. Pour l'utilisation individuelle de chaque dispositif de marquage, il suffit ensuite de les séparer par coupure selon les lignes 10. Le circuit 20 est représenté ici selon une échelle agrandie par rapport au reste du dessin, il s'agit en général d'un circuit électronique de très faibles dimensions, ses côtés étant typiquement inférieurs à un mm. Le bobinage 21 comporte une pluralité de spires, disposées sur plusieurs couches, d'un fil fin, dont le diamètre est de l'ordre de quelques centièmes de mm et formant une bobine à air, c'est-à-dire sans noyau. La formation du bobinage 21 et la soudure des deux fils sur les pistes du circuit 20 se fait de préférence sur une machine automatique.

A côté de la configuration d'une forme d'exécution du dispositif de marquage, la figure 2 représente aussi schématiquement l'utilisation d'un dispositif de marquage selon l'invention.

Un dispositif de marquage a été fixé sur une partie de vêtement 11, par des moyens qui seront décrits plus bas. Le bobinage 21 représenté ici en coupe est fortement agrandi par rapport à la figure précédente. Un appareil séparé 3, mobile ou fixe, et comportant une unité de lecture de code 30 et éventuellement une unité d'introduction ou de modification de code 31 est représenté de manière très schématique au-dessus du dispositif de marquage, seuls les éléments principaux dudit appareil étant représentés.

L'entreprise de location possédera de préférence un appareil complet, c'est-à-dire muni de l'unité d'introduction de code 31 comportant par exemple un clavier 31A. Le code, composé sur le clavier 31A, peut être contrôlé par l'affichage 30A, puis transformé sous la forme d'un signal électro-magnétique par des moyens électroniques internes à l'appareil avant d'être envoyé par l'antenne 30B, représentée ici sous la forme d'un bobinage, en direction du dispositif de marquage où il est reçu par le bobinage 21 faisant office d'antenne pour être transmis au circuit électronique 20 dans une partie de mémoire duquel il s'inscrit. Par la suite il sera toujours possible d'interroger le dispositif de marquage par un appareil 3, qui éventuellement ne possède pas l'unité d'introduction de code 31 mais seulement l'unité de lecture 30, l'interrogation se faisant à nouveau via le bobinage 30B et la lecture du code sur l'affichage 30A.

On constate donc déjà quelques avantages de l'invention, soit la possibilité d'introduire le code ou de le lire sans qu'il soit nécessaire d'accéder directement au dispositif de marquage autrement que par un signal électro-magnétique, symbolisé par une flèche sur la figure, faisant qu'il n'est pas nécessaire pour l'utilisateur d'accéder directement à l'étiquette, l'appareil 3 pouvant introduire ou lire le code à une certaine distance du dispositif de marquage, cette distance pouvant être de quelques centimètres jusqu'à quelques dizaines de centimètres. De plus, le dispositif de marquage est absolument passif, c'est-à-dire qu'il ne comporte aucune source d'énergie interne comme une batterie, le circuit électronique 20 étant activé par un signal en provenance de l'appareil 3. Un autre avantage immédiat est qu'une modification de code est très facile et très rapide, dès qu'on dispose d'un appareil 3 muni d'une unité d'introduction 31. Il est à remarquer que l'introduction, respectivement la lecture d'un code, ne se fait que lorsque l'habit n'est pas en phase de nettoyage, c'est-à-dire que la température à laquelle doit fonctionner le dispositif de marquage n'est pas critique. La seule précaution à prendre est que les éléments composant la partie électronique du dispositif de marquage 2 supportent, à l'état non actif, les températures nécessaires à la fixation du dispositif sur l'habit à marquer ainsi que celles auxquelles les habits sont soumis durant leur nettoyage. Les manières dont ces parties électroniques sont protégées de l'humidité sont décrites ci-dessous.

La figure 2 montre aussi une première forme d'exécution du dispositif de marquage avec les différentes couches assurant sa fixation sur l'habit ainsi que son étanchéité.

Comme indiqué en regard de la figure 1, on a tout d'abord une portion du ruban souple 1, en textile ou en matériau synthétique, dont une face est revêtue d'un enduit étanche thermoplastique thermoadhésif 12 sur laquelle est fixé le dispositif électronique de marquage 2 qui est lui-même recouvert d'une autre couche thermoplastique thermoadhésive 13. Lorsqu'on désire appliquer un dispositif de marquage sur une portion d'un habit 11, il suffit d'y déposer ledit dispositif, la couche thermoplastique 13 étant en contact avec l'habit 11, puis d'appliquer avec une certaine pression un fer à repasser à haute température sur la face supérieure de la portion de ruban 1 pour faire fondre partiellement les couches thermoplastique 12 et 13 pour les faire adhérer à la pièce d'habit 11. Le choix des matériaux thermoplastiques constituant les couches 12 et 13 est important, en particulier leur température de fusion. Il est en effet primordial que la température de fusion de ces couches soit supérieure à la plus haute des températures auxquelles sera soumis l'habit durant son nettoyage, respectivement son repassage. Par contre cette température de fusion devra être inférieure à la température à laquelle le dispositif de marqua¶ ge est appliqué sur l'habit comme indiqué plus haut. De plus ces couches thermoplastiques doivent résister aux produits et détergents utilisés pour le nettoyage. La protection du dispositif électronique 2 contre l'humidité est assurée par l'étanchéité des couches 12 et 13 ainsi que par leur soudure sur la périphérie du dispositif 2. Au-lieu d'avoir des couches thermoplastiques thermoadhésives, celles-ci peuvent être remplacées par des couches autocollantes, seule une pression étant nécessaire pour la fixation du dispositif sur l'habit.

Un autre forme d'exécution du dispositif de marquage est visible sur la figure 3, les moyens permettant d'assurer l'étanchéité du dispositif étant améliorés par rapport à la forme d'exécution précédente.

Le dispositif est semblable à celui décrit précédemment, si ce n'est que chacune des couches thermoplastiques est séparée en deux demi-couches 12A et 12B, respectivement 13A et 13B, une couche 12C et 13C d'un matériau non poreux parfaitement étanche, comme du polyester par exemple étant intercalée entre chacune des demi-couches précitées, assurant ainsi l'étanchéité transversale desdites couches. L'étanchéité radiale du dispositif est assurée par le joint soudé sur le pourtour du circuit 2. Il est évident que d'autres dispositions des différentes couches représentées peuvent être aussi envisagées afin d'assurer au mieux l'étanchéité du dispositif, en particulier si la pièce d'habit 11 ou la pièce de ruban 1 sont elles-mêmes constituées en un matériau synthétique étanche, il peut être possible de supprimer l'une ou l'autre des couches 12 ou 13.

Les épaisseurs des différentes couches sur les figures 2 et 3 ont été représentées de manière fortement exagérée afin de mieux les distinguer, mais en fait les couches thermoplastiques et polyester ont des épaisseurs de l'ordre de quelques centièmes de mm, faisant que l'épaisseur totale du dispositif est très faible et n'augmente pas de manière significative l'épaisseur de l'habit sur lequel il est fixé.

Selon une variante d'exécution, il est possible de ne pas fixer la couche thermoplastique 13 devant ultérieurement adhérer à la pièce à marquer 11 lors de la fabrication du dispositif, mais de poser une pièce séparée lors de la fixation du dispositif, la composition et les caractéristiques de cette pièce séparée étant choisies afin de s'adapter au matériau constituant la pièce à marquer 11 afin d'y adhérer au mieux.

Vu les faibles dimensions transversales et la faible épaisseur du dispositif de marquage selon l'invention, il est très discret et ne gêne en aucun cas le porteur de l'habit; vu que d'autre part le dispositif est relativement souple, il ne rigidifie pas la portion d'habit qui le supporte.

Bien d'autres utilisations du dispositif de marquage que celle décrite ci-dessus peuvent être envisagées; il peut aussi servir de dispositif de sécurité pour éviter le vol dans un magasin d'habillement, les issues du magasin étant munies de dispositifs de lecture réagissant lorsqu'un habit, dont le code de sécurité n'a pas été désactivé lors du paiement, passe à proximité. Le même dispositif peut aussi contenir des instructions de lavage ou d'entretien fournies par le fabricant, faisant que lorsque le possesseur mène son habit à nettoyer dans une entreprise équipée d'un dispositif de lecture, celle-ci peut connaître exactement les prescriptions de nettoyage. Le code peut être complété d'une partie de code identifiant le propriétaire de l'habit, particulièrement pour le cas d'habits de grande valeur. Les qualités propres du dispositif permettent aussi son utilisation pour d'autres objets que des habits, par exemple pour le contrôle de coupons d'étoffe et même pour le marquage d'objets rigides.

## Revendications

1. Dispositif électronique de marquage comprenant une partie électronique (2) comportant deux faces opposées, constituée d'un circuit électronique (20) comportant en particulier une partie de mémoire dans laquelle un code peut être inscrit et une antenne (21),
caractérisé en ce que
ladite partie électronique est fixée par une première face sur une portion d'une bande souple (1) au moyen d'une première couche en un matériau thermoplastique thermoadhésif ou autocollant (12), une seconde couche en un matériau thermoplastique thermoadhésif ou autocollant (13) recouvrant une seconde face ainsi qu'une première portion d'une surface périphérique de ladite première couche, une deuxième portion de ladite surface périphérique de la première couche ainsi que la seconde couche étant aptes à adhérer à un objet à marquer (11) sous l'action de la pression, et/ou de la chaleur.

2. Dispositif électronique de marquage selon la revendication 1, caractérisé en ce que l'antenne (21) est constituée par un bobinage dont les deux extrémités du fil bobiné sont reliées à deux pistes métalliques d'un circuit électronique (20).

3. Dispositif selon l'une des revendications 1 ou 2, caractérisé en ce que la partie de mémoire du circuit électronique (20) est programmable.

4. Dispositif selon l'une des revendications précédentes, caractérisé en ce que au moins une des deux couches de matériau thermoplastique (12,13) est séparée en deux demi-couches (12A,12B,13A,13B) par une couche (12C,13C) en un matériau non poreux à l'humidité.

5. Dispositif selon l'une des revendications précédentes, caractérisé en ce que la composition de la seconde couche thermoplastique (13;13A) est choisie en fonction de la matière constituant l'objet à marquer.

6. Utilisation d'un dispositif de marquage selon l'une des revendications précédentes pour le marquage d'un habit.

7. Utilisation d'un dispositif de marquage selon l'une des revendications 1 à 5 pour le marquage d'une pièce de textile.

## Patentansprüche

1. Elektronische Vorrichtung zur Kennzeichnung, welche einen elektronischen Teil (2) mit zwei gegenüberliegenden Flächen aufweist, bestehend aus einer elektronischen Schaltung (20), welche insbesondere einen Speicherteil, in welchem ein Code gespeichert sein kann, und eine Antenne (21) umfasst,
dadurch gekennzeichnet, dass
der genannte elektronische Teil durch eine erste Fläche auf einem Teil eines flexiblen Bandes (1) mittels einer ersten Schicht (12) aus thermoplastischem Material, das wärmeklebend oder selbstklebend ist, befestigt ist, dass eine zweite Schicht (13) aus einem thermoplastischen Material, das wärmeklebend oder selbstklebend ist, eine zweite Fläche sowie einen ersten Teil einer peripherischen Oberfläche der genannten ersten Schicht bedeckt, und dass ein zweiter Teil der genannten peripherischen Oberfläche der ersten Schicht sowie die zweite Schicht auf einen zu kennzeichnenden Gegenstand (11) unter der Wirkung von Druck und/oder Wärme aufklebbar sind.

2. Elektronische Vorrichtung zur Kennzeichnung nach Anspruch 1, dadurch gekennzeichnet, dass die Antenne (21) durch eine Wicklung gebildet ist, dessen zwei Enden des Wickeldrahtes mit zwei metallischen Kontakten einer elektronischen Schaltung verbunden sind.

3. Vorrichtung nach Anspruch 1 oder 2, dadurch gekennzeichnet, dass der Speicherteil der elektronischen Schaltung (20) programmierbar ist.

4. Vorrichtung nach einem der vorhergehenden Ansprüche, dadurch gekennzeichnet, dass mindestens eine der beiden Schichten aus thermoplastischem Material (12, 13) durch eine Schicht (12C,13C) aus einem feuchtigkeitsundurchlässigen Material in zwei Halbschichten (12A, 12B, 13A, 13B) getrennt ist.

5. Vorrichtung nach einem der vorhergehenden Ansprüche, dadurch gekennzeichnet, dass die Zusammensetzung der zweiten thermoplastischen Schicht (13; 13A) in Abhängigkeit des Materials, das den zu kennzeichnenden Gegenstand bildet, gewählt ist.

6. Verwendung einer Vorrichtung zur Kennzeichnung nach einem der vorhergehenden Ansprüche zur Kennzeichnung eines Kleidungsstückes.

7. Verwendung einer Vorrichtung zur Kennzeichnung nach einem der Ansprüche 1 bis 5 zur Kennzeichnung eines textilen Stückes.

## Claims

1. Electronic marking device including an electronic part (2) having two opposite faces, made up of an electronic circuit (20) having in particular a memory part in which a code can be written and an antenna (21),
characterised in that
said electronic part is fixed by a first face on a portion of a flexible strip (1) by means of a first layer of a thermoplastic thermo-adhesive or self-adhering material (12), a second layer of thermoplastic thermo-adhesive or self-adhering material (13) covering a second face as well as a first portion of a peripheral surface of the said first layer, a second portion of the said peripheral surface of the first layer as well as the second layer being able to adhere to an object to be marked (11) under the effect of pressure and/or of heat.

2. Electronic marking device according to claim 1, characterised in that the antenna (21) is made up of a winding, the two ends of the wound wire of which are connected to two metal paths of an electronic circuit (20).

3. Device according to one of the claims 1 or 2, characterised in that the memory part of the electronic circuit (20) is programmable.

4. Device according to one of the preceding claims, characterised in that at least one of the two layers of thermoplastic material (12, 13) is separated into two half-layers (12A, 12B, 13A, 13B) by a layer (12C, 13C) of a material non-porous to moisture.

5. Device according to one of the preceding claims, characterised in that the composition of the second thermoplastic layer (13; 13A) is chosen as a function of the material making up the object to be marked.

6. Use of a marking device according to one of the preceding claims for marking a garment.

7. Use of a marking device according to one of the claims 1 to 5 for marking a piece of textile.
